# EUROPEAN PATENT APPLICATION

(11) **EP 4 485 205 A1**
(43) Date of publication of application: **01.01.2025**
(21) Application number: 24170702.5
(22) Date of filing: 17.04.2024
(51) Int. Cl.: G06F 9/54

(54) **INTRA-DEVICE COMMUNICATION METHOD AND APPARATUS, ELECTRONIC DEVICE AND STORAGE MEDIUM**

(30) Priority: 25.06.2023 CN 202310751102
(71) Applicant: Beijing Xiaomi Mobile Software Co., Ltd., Beijing 100085 (CN)
(72) Inventor: SHAO, Cunjin, Beijing 100085 (CN)
(74) Representative: Dehns Germany Partnerschaft mbB

(57) **Abstract**

The present disclosure provides an intra-device communication method and apparatus, an electronic device and a storage medium. The method is performed by an agent module. The method includes: receiving a to-be-forwarded message; in response to the to-be-forwarded message being a first message forwarded by a framework module of the first device, sending the first message to a corresponding function module, the framework module being connected with a plurality of user interface (UI) modules of the first device, and the agent module being connected with a plurality of function modules of the first device; and in response to the to-be-forwarded message being a second message from at least one of the function modules, sending the second message to the framework module for the framework module to forward the second message to a corresponding UI module.

## Description

### TECHNICAL FIELD

The present disclosure relates to the electronic field, and in particular, to an intra-device communication method and apparatus, an electronic device and a storage medium.

### BACKGROUND

In an electronic device, there are usually multiple UI modules that can interact with a user, and different UI modules are used to implement different UI functions. In addition, there are function modules at the bottom of the electronic device that support the implementation of each UI function.

Since a UI module and a corresponding function module are located at different layers, the used data formats are also different. When UI modules communicate with corresponding function modules, it is needed to establish a communication manner between each UI module and its corresponding function module based on a quick application framework in the electronic device, which leads to a high degree of coupling between UI modules, the quick application framework and corresponding function modules. This results in poor portability and scalability of the solution, and makes development of a new function module in the electronic device more difficult.

### SUMMARY

Embodiments of the present disclosure provide an intra-device communication device and apparatus, an electronic device and a storage medium.

According to a first aspect of embodiments of the present disclosure, there is provided an intra-device communication method, performed by an agent module of a first device, the method including:
receiving a to-be-forwarded message;
in response to the to-be-forwarded message being a first message forwarded by a framework module of the first device, sending the first message to a corresponding function module, wherein the framework module is connected with a plurality of user interface (UI) modules of the first device, and the agent module is connected with a plurality of function modules of the first device; and
in response to the to-be-forwarded message being a second message from at least one of the function modules, sending the second message to the framework module, wherein the second message is configured for the frame module to be forwarded to a corresponding UI module.

Optionally, sending the first message to the corresponding function module includes:
in response to the first message having a first format, converting the first message having the first format into a second format and then sending the first message to the corresponding function module, wherein the first format is a data format recognizable by the framework module, and the second format is a data format recognizable by the function module.

Optionally, sending the second message to the framework module includes:
in response to the second message having the second format, converting the second message into the first format and then sending the second message to the framework module.

Optionally, sending the first message to the corresponding function module includes:
obtaining a first identity in the first message; and
based on the first identity, sending the first message to the function module identified by the first identity.

Optionally, the method further includes:
performing a message transmission between the agent module and the framework module using a first communication protocol; and
performing a message transmission between the agent module and the function module using a second communication protocol;
wherein the first communication protocol supports a communication between processes running on a same kernel, and the second communication protocol supports a communication between processes running on different kernels.

Optionally, the agent module includes a plurality of first interfaces, wherein one of the first interfaces is configured to forward a second message from a corresponding function module.

Optionally, sending the second message to the framework module in response to the to-be-forwarded message being the second message from at least one of the function modules, includes:
in response to the to-be-forwarded message being the second message from a first function module, sending the second message to the framework module through a first interface corresponding to the first function module.

Optionally, the first message includes a message generated by the UI module detecting a starting operation that triggers any UI function.

According to a second aspect of embodiments of the present disclosure, there is provided an intra-device communication apparatus, including:
a receiving module configured to receive a to-be-forwarded message;
a first sending module configured to, in response to the to-be-forwarded message being a first message forwarded by a framework module of the first device, send the first message to a corresponding function module, wherein the framework module is connected with a plurality of user interface (UI) modules of the first device, and the agent module is connected with a plurality of function modules of the first device; and
a second sending module configured to, in response to the to-be-forwarded message being a second message from at least one of the function modules, send the second message to the framework module, wherein the second message is configured for the frame module to be forwarded to a corresponding UI module.

Optionally, the first sending module is configured to:
in response to the first message having a first format, convert the first message having the first format into a second format and then send the first message to the corresponding function module, wherein the first format is a data format recognizable by the framework module, and the second format is a data format recognizable by the function module.

Optionally, the second sending module is configured to:
in response to the second message having the second format, convert the second message into the first format and then sending the second message to the framework module.

Optionally, the first sending module is configured to:
obtain a first identity in the first message; and
based on the first identity, send the first message to the function module identified by the first identity.

Optionally, the apparatus further includes:
a first transmission module configured to perform a message transmission between the agent module and the framework module using a first communication protocol; and
a second transmission module configured to perform a message transmission between the agent module and the function module using a second communication protocol;
wherein the first communication protocol supports a communication between processes running on a same kernel, and the second communication protocol supports a communication between processes running on different kernels.

Optionally, the agent module includes a plurality of first interfaces, wherein one of the first interfaces is configured to forward a second message from a corresponding function module.

Optionally, the second sending module is configured to:
in response to the to-be-forwarded message being the second message from a first function module, send the second message to the framework module through a first interface corresponding to the first function module.

Optionally, the first message includes a message generated by the UI module detecting a starting operation that triggers any UI function.

According to a third aspect of embodiments of the present disclosure, there is provided an electronic device, including:
a memory configured to store instructions executable by a processor; and
the processor connected to the memory;
wherein the processor is configured to perform the intra-device communication method according to any one of the above implementations.

According to a fourth aspect of embodiments of the present disclosure, there is provided a non-transitory computer-readable storage medium, wherein when instructions in the storage medium are executed by a processor of a computer, the computer is caused to perform the intra-device communication method according to any one of the above implementations.

The technical solutions provided by the embodiments of the present disclosure may include the following beneficial effects:
In the embodiments of the present disclosure, there is an agent module in a first device, and the agent module is connected to multiple function modules. Based on this, when the agent module receives a first message which is generated by any UI module and is forwarded by a framework module, the agent module can send the first message to a corresponding function module. When the agent module receives a second message which is sent by any function module, the agent module can send the second message to the framework module for the framework module to send the second message to a corresponding UI module.

As can be seen from the above, through the agent module in the embodiments of the present disclosure, decoupling between the framework module and multiple function modules can be achieved, that is, all function modules communicate with the agent module, without the need to communicate with each UI module based on the framework module. Thus, in the development procedure of a new function module, only the communication manner between the new function module and the agent module needs to be paid attention to, which reduces the difficulty in developing the new function module in the first device.

It should be understood that the above general description and the following detailed description are exemplary and explanatory only, and are not intended to limit the present disclosure.

### BRIEF DESCRIPTION OF THE DRAWINGS

The accompanying drawings, which are incorporated in and constitute a part of the specification, illustrate embodiments consistent with the present disclosure and together with the specification, serve to explain the principles of the present disclosure.
FIG. 1 is a schematic flowchart of an intra-device communication method;
FIG. 2 is a schematic flowchart of an intra-device communication method according to some embodiments of present disclosure;
FIG. 3 is a schematic flowchart of an intra-device communication method according to some embodiments of present disclosure;
FIG. 4 is a schematic flowchart of an intra-device communication method according to some embodiments of present disclosure;
FIG. 5 is an information interaction diagram between a first device and a second device according to some embodiments of present disclosure;
FIG. 6 is an information interaction diagram between a first device and a second device according to some embodiments of present disclosure;
FIG. 7 is an information interaction diagram between a first device and a second device according to some embodiments of present disclosure;
FIG. 8 is a schematic flowchart of an intra-device communication method according to some embodiments of present disclosure;
FIG. 9 is an information interaction diagram between a first device and a second device according to some embodiments of present disclosure;
FIG. 10 is a schematic structural diagram of an in-device communication apparatus according to some embodiments of present disclosure;
FIG. 11 is a schematic structural diagram of an electronic device according to some embodiments of present disclosure.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with the embodiments of the present disclosure. Rather, they are merely examples of apparatuses and methods consistent with certain aspects of embodiments of the present disclosure as set forth in the appended claims.

The terms used in the embodiments of the present disclosure are only for the purpose of describing example embodiments and are not intended to limit the embodiments of the present disclosure. As used in the embodiments and the appended claims, a singular form "a", "the" or "said" is intended to include a plural form as well, unless the context clearly dictates otherwise. It will also be understood that the term "and/or" as used herein refers to and includes any and all possible combinations of one or more associated listed items.

It should be understood that although the terms "first", "second", "third", etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the word "if' as used herein may be interpreted as "when" or "in a case where..." or "in response to determining...".

Before explaining the embodiments of the present disclosure in detail, the application scenarios involved in the embodiments of the present disclosure will be described first.

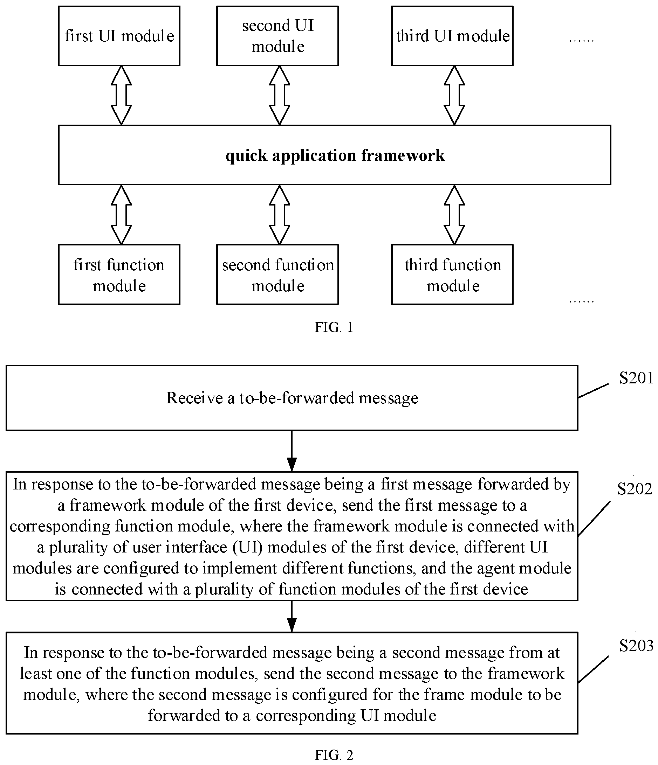

Referring to FIG. 1, in an electronic device, multiple User Interface (UI) modules are usually designed to implement different UI functions. For example, a UI module for adjusting the brightness of a screen is designed to adjust the brightness of the screen, or a UI module for automatic turn-off of the screen is designed to realize automatic turn-off of the screen.

For each UI module in the electronic device, there is a corresponding function module inside the electronic device, where each function module includes a Native process for implementing the corresponding UI function.

For example, the electronic device shown in FIG. 1 is designed with a first UI module, a second UI module, a third UI module, etc., and the electronic device also includes a first function module corresponding to the first UI module, a second function module corresponding to the second UI module, and a third function module corresponding to the third UI module.

When implementing any UI function in an electronic device, a UI module needs to communicate with its corresponding function module. However, since the UI module and the corresponding function module are located at different layers, the data formats used are also different. When UI modules communicate with corresponding function modules, it is needed to establish a communication manner between each UI module and its corresponding function module, resulting in a high degree of coupling between UI modules, a quick application framework and corresponding function modules. This may result in poor portability and scalability of the solution, which increases the difficulty in developing a new function module in the electronic device.

In order to solve the above problem, in an embodiment of the present disclosure, an intra-device communication method is provided. Referring to FIG. 2, FIG. 2 is a flowchart of an intra -device communication method. As shown in FIG. 2, the intra-device communication method in the embodiment of the present disclosure is performed by an agent module. The method includes:

In S201, a to-be-forwarded message is received.

In S202, in response to that the to-be-forwarded message is a first message forwarded by a framework module of a first device, the first message is sent to a corresponding function module. The framework module is connected with multiple UI modules of the first device. Different UI modules are configured to implement different UI functions. The agent module is connected with multiple function modules of the first device.

In S203, in response to that the to-be-forwarded message is a second message from at least one of the function modules, the second message is sent to the framework module for the framework module to forward the second message to a corresponding UI module.

The above-mentioned first device is an electronic device with a display screen, such as a smart TV, a smart watch, a learning machine, a smart phone, a smart refrigerator, a tablet computer or other terminal device.

The first device may be a terminal device using an Android system.

The agent module may be a program module. The agent module has a plurality of first interfaces and at least one second interface. The plurality of first interfaces are configured for a communication between the agent module and the framework module, and the at least one second interface is configured for a communication between the agent module and a function module.

According to an interface of the received to-be-forwarded message, the agent module may determine whether the to-be-forwarded message comes from the framework module or a function module, and perform a corresponding forwarding operation.

The framework module and the agent module are installed in the first device in the embodiments of the present disclosure.

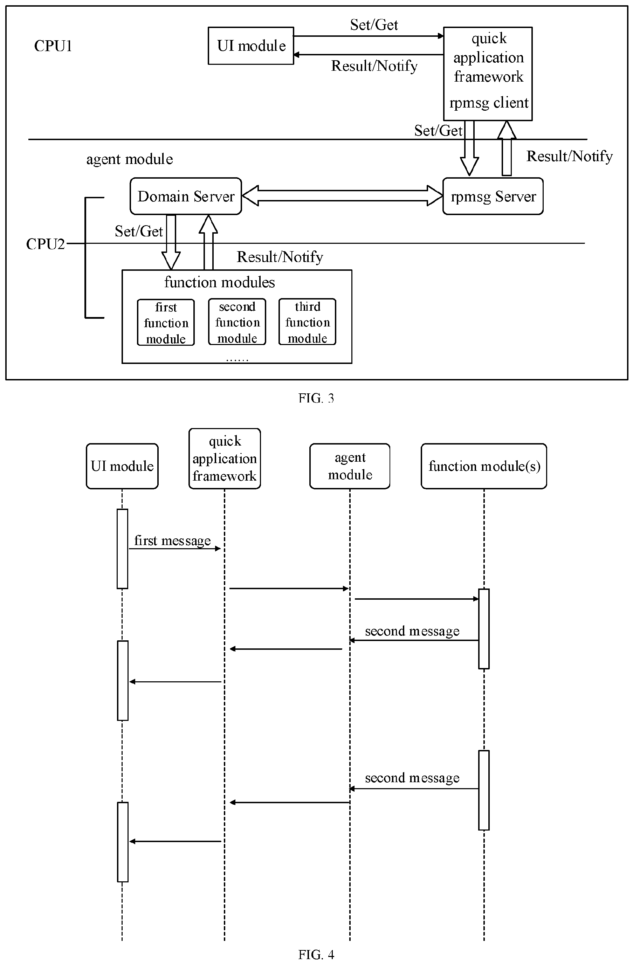

Referring to FIG. 3 and FIG. 4, the framework module is connected with the agent module and multiple UI modules in the first device. The framework module may be a quick application framework as shown in FIG. 3 and/or FIG. 4, and may forward a received first message which is sent by any one of the UI modules to the agent module, or may also forward a received second message which is sent by the agent module to a corresponding UI module.

The agent module is connected with the framework module and multiple function modules in the first device. The agent module may forward a received first message which is sent by the framework module to a corresponding function module, or may forward a received message which is sent by any one of the function modules to the framework module.

A function module may be a hardware module involving an underlying layer. For example, different function modules may correspond to different processes and so on. As another example, the function module may be implemented as part of or include an application specific integrated circuit (ASIC), an electronic circuit, a combinational logic circuit, a field programmable gate array, a processor that executes code and so on.

For example, the above-mentioned framework module may be an application framework or a quick application framework installed in the first device. For example, the quick application is new type of application form based on a mobile phone hardware platform, with a complete application experience of traditional APP, no installation required, and the application can be used upon user's click/tap). All UI functions in the first device are implemented based on the quick application framework in the first device.

The above-mentioned agent module may be an agent service process installed in the first device.

The above-mentioned UI modules are used to implement different UI functions, for example, to implement a function of adjusting the brightness of the screen, to implement a function of automatically turning off the screen, or to implement a function of waking up any application installed in the first device, etc..

The above-mentioned function modules may be processes related to implementing corresponding UI functions.

For each UI module on the first device, there is a function module related to the UI module in the first device.

Based on this, when the first UI module in the first device detects a user's trigger operation, it sends a first message to the framework module. After receiving the first message, the framework module forwards the received first message to the agent module which sends the first message to a first function module that is to receive the first message.

In addition, after the first function module starts a first UI function in the first device based on the received first message, the first function module sends a second message to the agent module. Correspondingly, the agent module sends the received second message to the framework module, so that the framework module can send the second message to the first UI module for the first UI module to display a starting result of the first function on the display screen.

The above-mentioned first function module is any one of the function modules in the first device.

For example, when a UI module in the first device for realizing screen brightness adjustment detects a user's adjustment operation of adjusting the screen brightness value to a first brightness, the UI module sends a first message to the framework module which forwards the first message to the agent module. The first message is used to request to adjust the brightness of the display screen to the first brightness.

Correspondingly, the agent module receives the first message and sends the first message to a function module related to the screen brightness. The function module related to the screen brightness calls a corresponding hardware interface based on the first message, and sets the brightness value corresponding to the first brightness into the hardware used to adjust the screen brightness, so that the display brightness of the screen is the first brightness.

Afterwards, the function module related to the screen brightness can also send a second message to the agent module. The second message is used to indicate an adjustment result of the screen brightness. After receiving the second message, the agent module forwards the second message to the framework module. Correspondingly, the framework module sends the received second message to the UI module related to screen brightness adjustment, so that the UI module related to screen brightness adjustment controls the display screen to display the adjustment result of the screen brightness.

The UI module related to screen brightness adjustment controlling the display screen to display the adjustment result of the screen brightness may include displaying the current screen brightness value, or displaying an icon that can indicate the current brightness value.

In another embodiment, the second message received by the agent module may be a notification message which is actively sent by the first function module in the first device when detecting that a function related to the first function module in the first device is started.

Exemplarily, when a function module related to a first application in the first device detects that the first application installed in the first device is started, the function module related to the first application actively sends a second message to the agent module. The second message is used to indicate that the first application has been started.

After the agent module receives the second message, the agent module sends the second message to the framework module. Correspondingly, the framework module forwards the received second message to a UI module related to the first application for the UI module related to the first application to control the first device to display an application interface of the first application.

In another embodiment, the second message received by the agent module may be sent by any function module in the first device when receiving a third message which is sent by a second device connected to the first device..

The second device is also an electronic device with a display screen and using the Android system, such as smart TV, smart watch, learning machine, smart phone, tablet computer or other terminal device.

It should be noted that the first device and the second device may be devices of the same type, or may be devices of different types, which is not limited in the embodiments of the present disclosure.

For example, the first device may be a smart TV and the second device may be a smartphone, or both the first device and the second device may be smart phones.

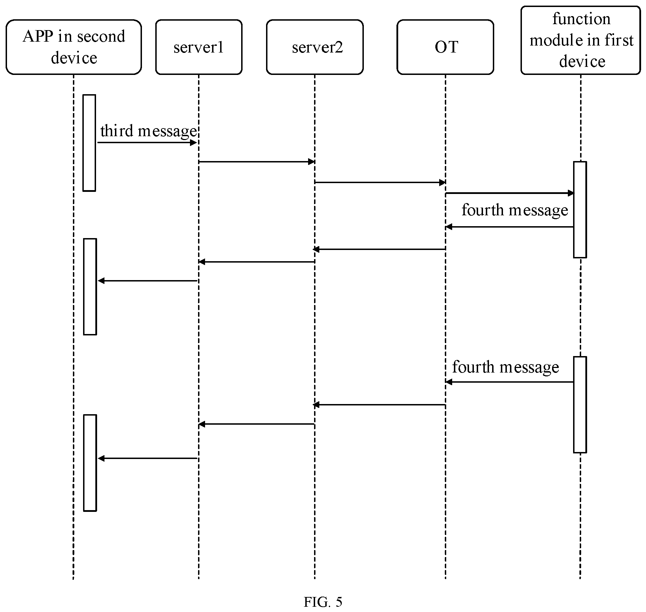

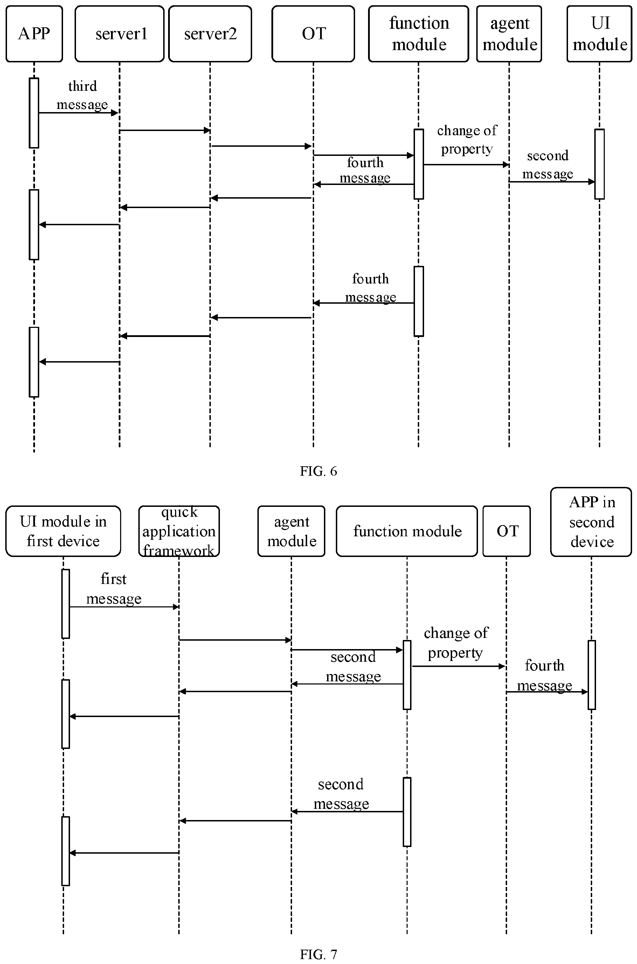

Referring to FIG. 5 and FIG. 6, the first device in the embodiments of the present disclosure may also be communicatively connected with a second device, where a second application for controlling at least one function module in the first device is installed on the second device.

Based on this, when a user starts a first function in the first device through the second application installed in the second device, the second device may send a third message to a first function module in the first device based on the second application. Correspondingly, the first function module receives the third message sent by the second device, and starts the first function in the first device.

Afterwards, the first function module sends a second message to the agent module, where the second message is used to indicate that the first function in the first device has been started. After receiving the second message, the agent module forwards the second message to the framework module, so that the framework module sends the second message to a first UI module for the first UI module to control the first device to display a starting result of the first function.

In addition, after the first function is started, the first function module also sends a fourth message to the second device. The fourth message is used for the second device to display the starting result of the first function on the second application.

For example, with reference to FIG. 5 and FIG. 6, when the second application (APP in FIG. 5 and FIG. 6) in the second device detects that the user controls the first application in the first device to start through the second application in the second device, a third message is sent to a second server through a first server of the second application (server 1 in FIG. 5 and FIG. 6).

Correspondingly, the second server receives the third message sent by the first server, and sends the third message to a function module related to the first application in the first device through a message channel (OT in FIG. 5 and FIG. 6) which is established with the first device. The function module related to the first application, after receiving the third message sent by the second server, starts the first application in the first device, and sends a fourth message to the second server through the OT channel. The fourth message is used to indicate the starting result of the first application in the first device.

After receiving the fourth message, the second server sends the fourth message to the first server, so that the first server forwards the fourth message to the second device for controlling the second application in the second device to display the starting result of the first application.

In addition, the function module related to the first application in the first device sends a second message to the agent module after the first application is started. Correspondingly, the agent module receives the second message and sends the received second message to the framework module, so that the framework module forwards the second message to a UI module related to the first application for the UI module related to the first application to control the first device to display the application interface of the first application.

For example, when a property of a first component in the first device changes, a function module related to the first component actively sends a second message to the agent module. After receiving the second message, the agent module sends the second message to the framework module, so that the framework module can forward the second message to a UI module related to the first component for the UI module to display a corresponding interface.

In addition, the function module related to the first component also sends a fourth message to the second server through the OT channel, and the fourth message is forwarded to the second device via the second server and the first server, so that the second device controls the second application to record the latest property information of the first component in the first device.

In the embodiments of the present disclosure, when the second device controls the starting of the first function in the first device, the starting result of the first function is fed back to the second device, so that the user can know the device status of the first device in a timely manner, thereby improving user experience.

In one embodiment, after the first function module starts the first function based on the received first message which is sent by the agent module, the first function module can also actively send a fourth message to the second device, so that the second device displays the starting result of the first function in the first device.

Exemplarily, when a first UI module in the first device detects a starting operation of the first function triggered by the user, a first message may be generated and sent to the framework module, so that the framework module may forward the first message to the agent module.

After receiving the first message, the agent module sends the first message to the first function module for the first function module to start the first function.

After the first function is started, the first function module not only sends a second message to the agent module, but also sends a fourth message to the second device, so that the second device can control the second application to record the starting result of the first function in the first device based on the fourth message.

Exemplarily, referring to FIG. 7, when the UI module related to screen brightness adjustment detects a user-triggered screen brightness adjustment operation, a first message is sent to the framework module, and the framework module forwards the first message to the agent module. The agent module forwards the first message to the function module related to screen brightness, so that the function module related to screen brightness calls a hardware interface related to screen brightness to update a screen brightness parameter based on the first message.

After completing the update of the screen brightness parameter, the function module related to the screen brightness sends a second message to the agent module. The second message is forwarded to the UI module related to screen brightness adjustment through the agent module and the framework module for the UI module related to screen brightness adjustment to control the screen to display a new screen brightness value.

In addition, after completing the update of the screen brightness parameter, the function module related to the screen brightness also sends a fourth message to the second server through the OT channel, and the fourth message is forwarded to the second device via the first server, so that the second application in the second device records the current screen brightness of the first device.

The above-mentioned first server and second server may be the same server, or may be different servers. There may also be other server(s) between the first server and the second server for forwarding the third message and the fourth message, and embodiments of the present disclosure do not impose specific limitations on this.

In the embodiments of the present disclosure, there is an agent module in the first device, and the agent module is connected to multiple function modules. Based on this, when the agent module receives the first message forwarded by the framework module, it can send the first message to a corresponding function module. When the agent module receives the second message sent by any function module, it can send the second message to the framework module, for the framework module to send the second message to a corresponding UI module.

As can be seen from the above, through the agent module in the embodiments of the present disclosure, decoupling between the framework module and multiple function modules can be achieved. That is, all function modules communicate with the agent module, without the need to communicate with each UI module based on the framework module. Thus, in the development process of a new function module, only the communication manner between the new function module and the agent module needs to be paid attention to, which reduces the difficulty in developing the new function module in the first device.

In one embodiment, the first message includes: a message which is generated by the UI module detecting a starting operation that triggers any UI function.

As can be seen from the above introduction, there are multiple UI modules designed on the first device, and each UI module is used to implement a different UI function. Since UI modules are modules that directly interact with a user, when any one of the UI modules detects a user's trigger operation for starting a corresponding UI function, it generates a first message and sends the generated first message to the framework module.

Exemplarily, when a user's adjustment operation on the screen brightness is detected, the UI module related to the screen brightness adjustment generates a first message, for requesting to call the function module related to screen brightness, and sends the generated first message to the framework module.

When detecting a user's starting operation for the first application installed in the first device, the UI module related to the first application generates a first message for calling the function module related to starting of the first application, and sends the generated first message to the framework module.

In one embodiment, sending the first message to the corresponding function module includes:
in response to the first message having a first format, converting the first message having the first format into a second format and then sending the first message to the corresponding function module, where the first format is a data format recognizable by the framework module, and the second format is a data format recognizable by the function module.

As can be seen from the above introduction, since all UI functions in the first device are implemented based on the framework module, the data format of the first message generated by a UI module needs to be a data format that can be recognized by the framework module. However, due to the framework module and function modules are located at different layers of the first device, the data format of the first message generated by the UI module may not be a data format that can be recognized by the corresponding function module. Based on this, in the embodiments of the present disclosure, when the agent module receives the first message in a first format that the function module cannot recognize, the agent module converts first message in the first format into a second format that the function module can recognize and then sends the first message to the corresponding function module.

For example, when the above framework module is a quick application framework, the data format that the quick application framework can recognize is a BP (proto buf) format. Therefore, the first message which is forwarded by the framework module and received by the agent module is a message in a BP format, but the data format that the function module can recognize is a json format.

Based on this, when the agent module receives the first message in the BP format, the agent module converts the first message into the json format and then sends the first message to the corresponding function module.

In one embodiment, sending the second message to the framework module includes:
in response to the second message having the second format, converting the second message into the first format and then sending the second message to the framework module.

As can be seen from the above introduction, since the data formats that the framework module and the function modules can recognize are different, when a second message received by the agent module is a second message in the json format, the framework module and the UI module(s) cannot recognize the second message in the json format, and thus the agent module converts the second message having the json format into the BP format and sends the second message to the framework module, so that the framework module can sends the second message having the BP format to a corresponding UI module.

In one embodiment, sending the first message to the corresponding function module includes:
obtaining a first identity in the first message; and
based on the first identity, sending the first message to a function module identified by the first identity.

In the embodiments of the present disclosure, considering that the agent module is connected to multiple function modules, when the agent module receives a first message sent by the framework module, it needs to know which function module the first message is sent to. Therefore, when the UI module generates the first message, the first identity can also be added to the first message. Based on this, the agent module can obtain the first identity in the first message when receiving the first message forwarded by the framework module, and based on the first identity, the agent module sends the first message to the function module identified by the first identity in the first message.

For example, when the first message is a first message sent by a UI module related to screen brightness adjustment, the first message may carry a first identity capable of identifying the UI module related to screen brightness adjustment. Based on this, when the agent module receives the first message forwarded by the framework module, it can determine based on the first identity to send the first message to a function module related to screen brightness.

The above-mentioned first identity may be identity information that can uniquely identify each UI module.

In an embodiment, a second identity may also be added to the second message.

In one embodiment, the method further includes:
performing a message transmission between the agent module and the framework module using a first communication protocol; and
performing a message transmission between the agent module and the function module(s) using a second communication protocol;
where the first communication protocol supports a communication between processes running on the same kernel, and the second communication protocol supports a communication between processes running on different kernels.

In the embodiments of the present disclosure, considering that with the development of electronic technologies, in order to improve the operating speed of an electronic device, multiple kernels may be provided in the first device. A communication protocol adopted for a communication between processes on a same kernel is different from the communication protocol adopted for a communication between processes on different kernels.

Therefore, when it is determined that the framework module and the agent module run on the same kernel, the framework module and the agent module can communicate with each other using the first communication protocol. When the framework module and the agent module run on different kernels, the framework module and the agent module can communicate with each other using the second communication protocol.

For example, when the framework module and the agent module run on the same kernel, the framework module and the agent module can communicate using a unix domain socket (network domain socket) communication method. When the framework module and the agent module run on different kernels, the framework module and the agent module can communicate using a rpmsg socket (Remote Processor Messaging socket) communication method.

In one embodiment, the agent module includes multiple first interfaces, wherein one of the first interfaces is configured to forward a second message from a corresponding function module.

In the embodiment of the present disclosure, the agent module is provided with first interfaces, the number of which is the same as the number of the UI modules. The frame module is provided with third interfaces corresponding to the first interfaces on the agent module.

For example, assuming that the first device has three UI modules, namely a first UI module, a second UI module and a third UI module. The framework module is provided with a third interface 1 configured to forward a first message sent by the first UI module, a third interface 2 configured to forward a first message sent by the second UI module, and a third interface 3 configured to forward a first message sent by the third UI module.

Correspondingly, the agent module is provided with a first interface 1 configured to communicate with the third interface 1, a first interface 2 configured to communicate with the third interface 2, and a first interface 3 configured to communicate with the third interface 3.

Based on this, when the agent module receives a first message through the first interface 1, the first message is sent to the first function module corresponding to the first UI module. When the agent module receives a first message through the first interface 2, the first message is sent to the second function module corresponding to the second UI module. Similarly, when the agent module receives a first message through the first interface 3, the first message is sent to the third function module corresponding to the third UI module.

When the agent module receives a second message, it can determine which function module the second message comes from based on the second identity in the second message. If the agent module determines that the second message comes from the first function module based on the second identity in the second message, the agent module sends the second message to the framework module through the first interface 1, so that the framework module can send the second message to the first UI module.

If the agent module determines that the second message comes from the second function module based on the second identity in the second message, the agent module sends the second message to the framework module through the first interface 2, so that the framework module can send the second message to the second UI module.

Similarly, if the agent module determines that the second message comes from the third function module based on the second identity in the second message, the agent module sends the second message to the framework module through the first interface 3, so that the framework module can send the second message to the third UI module.

Referring to FIG. 3, an embodiment of the present disclosure also provides an intra-device communication method, including the following contents.

Downlink message: a user performs an operation on a first device UI to control a device function (Set/Get), such as adjusting the screen brightness. A UI module sends a Set control message (first message) to the quick application framework. The quick application framework sends the message through the rpmsg socket to the agent module (Service Agent). The Service Agent internally sends the message to the Spec module (function module related to screen brightness) of the Native process through the Unix domain socket. The Spec module sets the corresponding screen brightness value into a corresponding hardware by calling the underlying bsp interface, so that the new screen brightness value takes effect, and the result is returned to the UI for display.

Uplink message: a underlying status change is notified to the UI and displayed to a user. For example, after a Mico module (a function module related to the first application) detects that the first application is waken up, it will actively send a second message to the Service Agent through the Unix domain socket. The Service Agent internally sends the second message to the quick application framework through the rpmsg socket. The quick application framework notifies the UI to display the application interface of the first application to the user.

An embodiment of the present disclosure defines a general method for a communication between Native and a UI of a smart device having a screen. The Service Agent module, as an agent, implements the communication between the UI and a Native function module, and implements establishment of an interprocess communication channel for between the Native process (Mico/Midess/Spec and so on) and the quick application framework and the forwarding of messages.

The Service Agent can be used as a unified communication channel between the UI and Native processes (Mico/Midess/Spec, etc.), and can be applied to all function modules involved in interactions with the UI, including function modules such as device initialization and network configuration, device settings (such as screen brightness adjustment, automatic turn-off of screen, buttons or other Spec functions), OT, first application service, or device scenario service, and so on.

Service Agent module IPC (Inter-progress communication) communication mechanism:
Cross-kernel rpmsg socket communication is performed between the Service Agent and the quick application framework, and a message channel between the Service Agent and the UI is realized.

The unix domain socket communication is performed between the Service Agent and Native, and a message channel between Service Agent and a local module (Native) is realized.

In the embodiments of the present disclosure, rpmsg cross-kernel communication can be adjusted accordingly according to project needs. If the cross-kernel communication scenario between UI and Native is not involved, the Service Agent can be used to implement the unix domain socket server, and the UI side can be connected to the client as a client, implementing a message forwarding channel between UI and Native.

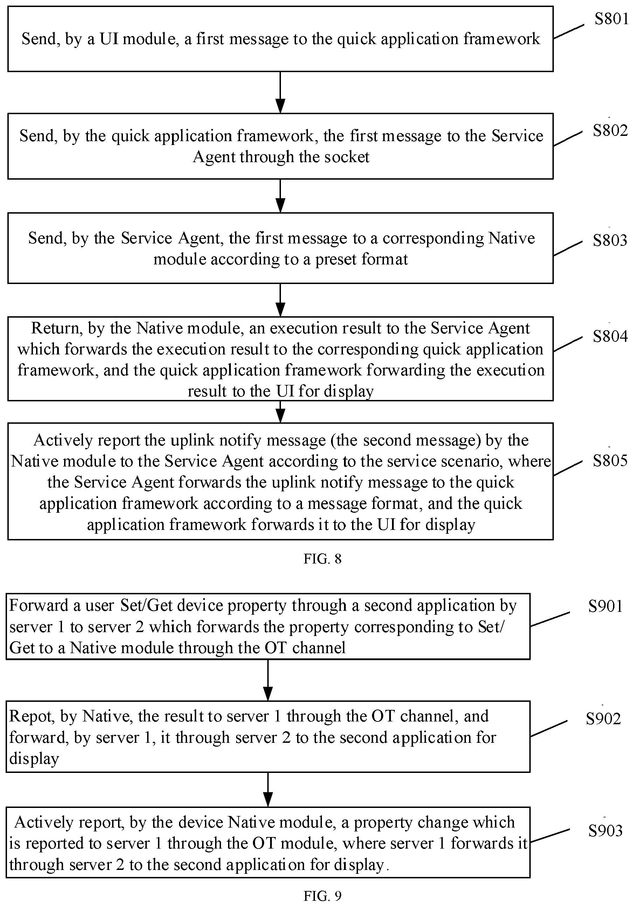

The above specific operation process is shown in FIG. 4 and FIG. 8.

In S801, a UI module sends a first message to the quick application framework.

In S802, the quick application framework sends the first message to the Service Agent through the socket.

In S803, the Service Agent sends the first message to a corresponding Native module according to a preset format.

In S804, the Native module returns an execution result to the Service Agent, the Service Agent forwards the execution result to the corresponding quick application framework, and the quick application framework forwards the execution result to the UI for display.

In S805, the uplink notify message (the second message) is actively reported by the Native module to the Service Agent according to the service scenario. The Service Agent forwards the uplink notify message to the quick application framework according to a message format, and the quick application framework forwards it to the UI for display.

Referring to FIG. 6 and FIG. 9, FIG. 6 shows an implementation process where the second application in the second device controls the starting of the first function in the first device. The implementation process is as follows:
In S901, a user Set/Get device property through a second application is forwarded by server 1 to server 2, and server 2 forwards the property corresponding to Set/Get to a Native module through the OT channel.
In S902, Native reports the result to server 1 through the OT channel, and server 1 forwards it through server 2 to the second application for display.
In S903, the device Native module actively reports a property change, and reports it to server 1 through the OT module, and server 1 forwards it through server 2 to the second application for display.

The product-defined spec is implemented by the Spec module. In order to realize data synchronization of the UI module in the first device and the second application in the second device, when the UI module in the first device and the second application Set property (property setting) performs an operation, it is needed for the Spec module to actively report a property_changed (change of property) message to synchronize the message with the second application in the second device and the UI module of the first device.

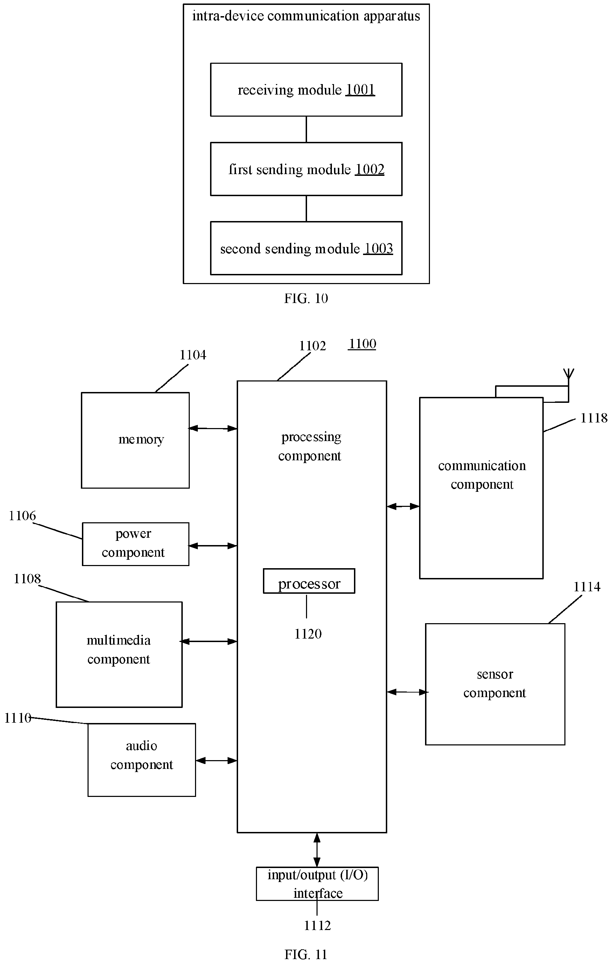

Referring to FIG. 10, an embodiment of the present disclosure further provides an intra-device communication apparatus. The apparatus includes a receiving module 1001, a first sending module 1002, and a second sending module 1003.

The receiving module 1001 is configured to receive a to-be-forwarded message.

The first sending module 1002 is configured to, in response to the to-be-forwarded message being a first message forwarded by a framework module of the first device, send the first message to a corresponding function module, wherein the framework module is connected with a plurality of user interface (UI) modules of the first device, and the agent module is connected with a plurality of function modules of the first device.

The second sending module 1003 is configured to, in response to the to-be-forwarded message being a second message from at least one of the function modules, send the second message to the framework module for the framework module to forward the second message to a corresponding UI module.

Optionally, the first sending module 1002 is configured to:
in response to the first message having a first format, convert the first message having the first format into a second format and then send the first message to the corresponding function module, wherein the first format is a data format recognizable by the framework module, and the second format is a data format recognizable by the function module.

Optionally, the second sending module 1003 is configured to:
in response to the second message having the second format, convert the second message into the first format and then sending the second message to the framework module.

Optionally, the first sending module 1002 is configured to:
obtain a first identity in the first message; and
based on the first identity, send the first message to the function module identified by the first identity.

Optionally, the apparatus further includes:
a first transmission module configured to perform a message transmission between the agent module and the framework module using a first communication protocol; and
a second transmission module configured to perform a message transmission between the agent module and the function module using a second communication protocol;
wherein the first communication protocol supports a communication between processes running on a same kernel, and the second communication protocol supports a communication between processes running on different kernels.

Optionally, the agent module includes a plurality of first interfaces, wherein one of the first interfaces is configured to forward a second message from a corresponding function module.

Optionally, the second sending module 1003 is configured to:
in response to the to-be-forwarded message being the second message from a first function module, send the second message to the framework module through a first interface corresponding to the first function module.

Optionally, the first message includes a message generated by the UI module detecting a starting operation that triggers any UI function.

Referring to FIG. 11, an embodiment of the present disclosure provides an electronic device 1100. The electronic device 1100 is the above first device or the second device. The electronic device includes:
a memory 1104 configured to store instructions executable by a processor 1120; and
the processor 1120 connected to the memory 1104.

The processor 1120 is configured to perform the intra-device communication method provided by any one of the technical solutions described above.

The block diagram of the electronic device 1100 is shown according to some embodiments of present disclosure. For example, the electronic device 1100 may be a mobile phone, a tablet computer, a notebook computer, or a portable learning machine, etc.

Referring to FIG. 11, the electronic device 1100 may include one or more of the following components: a processing component 1102, a memory 1104, a power component 1106, a multimedia component 1108, an audio component 1110, an input/output (I/O) interface 112, a sensor component 1114, and a communication component 1116.

The processing component 1102 typically controls overall operations of the electronic device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the electronic device 1100. Examples of such data include instructions for any applications or methods operated on the electronic device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the electronic device 1100. The power component 1106 may include a power management system, one or more power sources, and any other components associated with the generation, management, and distribution of power in the electronic device 1100.

The multimedia component 1108 includes a screen providing an output interface between the electronic device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 1108 includes a front camera and/or a rear camera. The front camera and the rear camera may receive an external multimedia datum while the E electronic device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the electronic device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the electronic device 1100. For instance, the sensor component 1114 may detect an open/closed status of the electronic device 1100, relative positioning of components, e.g., the display and the keypad, of the electronic device 1100, a change in position of the electronic device 1100 or a component of the electronic device 1100, a presence or absence of user contact with the electronic device 1100, an orientation or an acceleration/deceleration of the electronic device 1100, and a change in temperature of the electronic device 1100. The sensor component 1114 may include a proximity sensor configured to detect the presence of nearby objects without any physical contact. The sensor component 1114 may also include a light sensor, such as a CMOS or CCD bioinformation sensor, for use in imaging applications. In some embodiments, the sensor component 1114 may also include an accelerometer sensor, a gyroscope sensor, a magnetic sensor, a pressure sensor, or a temperature sensor.

The communication component 1118 is configured to facilitate communication, wired or wirelessly, between the electronic device 1100 and other devices. The electronic device 1100 can access a wireless network based on a communication standard, such as WiFi, 2G, or 3G, or a combination thereof. In one embodiment, the communication component 1118 receives a broadcast signal or broadcast associated information from an external broadcast management system via a broadcast channel. In one embodiment, the communication component 1118 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the electronic device 1100 may be implemented with one or more application specific integrated circuits (ASICs), digital signal processor (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as the memory 1104 including instructions executable by the processor 1120 in the electronic device 1100, for performing the above-described methods. For example, the non-transitory computer-readable storage medium may be a ROM, a Random Access Memory (RAM), a CD-ROM, a magnetic tape, a floppy disc, an optical data storage device, and the like.

An embodiment of the present disclosure provides provide a non- transitory computer-readable storage medium. When instructions in the storage medium are executed by a processor of a computer, the computer is caused to implement the intra-device communication methods described in one or more technical solutions above.

When the processor executes the instructions, the computer is caused to perform at least the following steps:
receiving a to-be-forwarded message;
in response to the to-be-forwarded message being a first message forwarded by a framework module of the first device, sending the first message to a corresponding function module, wherein the framework module is connected with a plurality of user interface (UI) modules of the first device, different UI modules are configured to implement different functions, and the agent module is connected with a plurality of function modules of the first device; and
in response to the to-be-forwarded message being a second message from at least one of the function modules, sending the second message to the framework module for the frame module to forward the second message to a corresponding UI module.

Optionally, sending the first message to the corresponding function module includes:
in response to the first message having a first format, converting the first message having the first format into a second format and then sending the first message to the corresponding function module, wherein the first format is a data format recognizable by the framework module, and the second format is a data format recognizable by the function module.

Optionally, sending the second message to the framework module includes:
in response to the second message having the second format, converting the second message into the first format and then sending the second message to the framework module.

Optionally, sending the first message to the corresponding function module includes:
obtaining a first identity in the first message; and
based on the first identity, sending the first message to the function module identified by the first identity.

Optionally, the method further includes:
performing a message transmission between the agent module and the framework module using a first communication protocol; and
performing a message transmission between the agent module and the function module using a second communication protocol;
wherein the first communication protocol supports a communication between processes running on a same kernel, and the second communication protocol supports a communication between processes running on different kernels.

Optionally, the agent module includes a plurality of first interfaces, wherein one of the first interfaces is configured to forward a second message from a corresponding function module.

Optionally, sending the second message to the framework module in response to the to-be-forwarded message being the second message from at least one of the function modules, includes:
in response to the to-be-forwarded message being the second message from a first function module, sending the second message to the framework module through a first interface corresponding to the first function module.

Optionally, the first message includes a message generated by the UI module detecting a starting operation that triggers any UI function.

Other embodiments of the disclosure will be apparent to those skilled in the art from consideration of the specification and practice of the disclosure disclosed here It is intended that the specification and examples be considered as exemplary only, with a true scope of the disclosure being indicated by the following claims.

## Claims

1. An intra-device communication method, performed by an agent module of a first device, the method comprising:
receiving (S201) a to-be-forwarded message;
in response to the to-be-forwarded message being a first message forwarded by a framework module of the first device, sending (S202) the first message to a corresponding function module, wherein the framework module is connected with a plurality of user interface (UI) modules of the first device, and the agent module is connected with a plurality of function modules of the first device; and
in response to the to-be-forwarded message being a second message from at least one of the plurality of function modules, sending (S203) the second message to the framework module, for the framework module to forward the second message to a corresponding UI module.

2. The method according to claim 1, wherein sending the first message to the corresponding function module comprises:
in response to the first message being in a first format, converting the first message being in the first format into a second format and sending the first message to the corresponding function module, wherein the first format is a data format recognizable by the framework module, and the second format is a data format recognizable by the function module.

3. The method according to claim 2, wherein sending the second message to the framework module comprises:
in response to the second message being in the second format, converting the second message into the first format and sending the second message to the framework module.

4. The method according to any one of the preceding claims, wherein sending the first message to the corresponding function module comprises:
obtaining a first identity in the first message; and
based on the first identity, sending the first message to the function module identified by the first identity.

5. The method according to any one of the preceding claims , further comprising:
performing a message transmission between the agent module and the framework module using a first communication protocol; and
performing a message transmission between the agent module and the function module using a second communication protocol,
wherein the first communication protocol supports a communication between processes running on a same kernel, and the second communication protocol supports a communication between processes running on different kernels.

6. The method according to any one of the preceding claims, wherein the agent module comprises a plurality of first interfaces, wherein one of the plurality of first interfaces is configured to forward the second message from a corresponding function module.

7. The method according to claim 6, wherein sending the second message to the framework module in response to the to-be-forwarded message being the second message from the at least one of the plurality of function modules, comprises:
in response to the to-be-forwarded message being the second message from a first function module, sending the second message to the framework module through a first interface corresponding to the first function module.

8. The method according to any one of claims 1 to 7, wherein the first message comprises a message generated by the UI module detecting a starting operation that triggers any UI function.

9. The method according to any one of the preceding claims, wherein the agent module is a program module installed in the first device.

10. The method according to claim 9, wherein the agent module is an agent service process installed in the first device.

11. The method according to any one of the preceding claims, wherein the framework module is a quick application framework installed in the first device.

12. An intra-device communication apparatus, comprising:
a receiving module (1001) configured to receive a to-be-forwarded message;
a first sending module (1002) configured to, in response to the to-be-forwarded message being a first message forwarded by a framework module of the first device, send the first message to a corresponding function module, wherein the framework module is connected with a plurality of user interface (UI) modules of the first device, and the agent module is connected with a plurality of function modules of the first device; and
a second sending module (1003) configured to, in response to the to-be-forwarded message being a second message from at least one of the plurality of function modules, send the second message to the framework module for the framework module to forward the second message to a corresponding UI module.

13. The apparatus according to claim 12, wherein the first sending module is configured to:
in response to the first message being in a first format, convert the first message being in the first format into a second format and send the first message to the corresponding function module, wherein the first format is a data format recognizable by the framework module, and the second format is a data format recognizable by the function module.

14. The apparatus according to claim 13, wherein the second sending module is configured to:
in response to the second message being in the second format, convert the second message into the first format and send the second message to the framework module.

15. A non-transitory computer-readable storage medium, wherein when instructions in the storage medium are executed by a processor of a computer, the computer is caused to perform the intra-device communication method according to any one of claims 1 to 11.
